# EUROPÄISCHE PATENTSCHRIFT

(11) **EP 2 049 297 B1**
(45) Veröffentlichungstag und Bekanntmachung des Hinweises auf die Patenterteilung: **22.06.2011**
(21) Anmeldenummer: 07801455.2
(22) Anmeldetag: 26.07.2007
(51) Int. Cl.: B23C 5/24, B23D 77/02

(54) **WERKZEUG ZUR SPANENDEN BEARBEITUNG VON WERKSTÜCKEN**
TOOL FOR MACHINING WORKPIECES
OUTIL POUR L'USINAGE DE PIÈCES PAR ENLÈVEMENT DE MATIÈRES

(30) Priorität: 05.08.2006 DE 102006036765
(43) Veröffentlichungstag der Anmeldung: 22.04.2009
(73) Patentinhaber: MAPAL Fabrik für Präzisionswerkzeuge Dr. Kress KG, D-73431 Aalen (DE)
(72) Erfinder: KRESS, Dieter, 73431 Aalen (DE)
(74) Vertreter: Gleiss & Grosse
(86) Internationale Anmeldenummer: PCT/EP2007/006623
(87) Internationale Veröffentlichungsnummer: WO 2008/017383

(56) Entgegenhaltungen:
- EP-A- 1 136 162
- DE-A1- 2 615 913
- DE-C1- 3 607 528

## Beschreibung

Die Erfindung betrifft ein Werkzeug zur spanenden Bearbeitung von Werkstücken, gemäß Oberbegriff des Anspruchs 1.

Werkzeuge der hier angesprochenen Art sind bekannt. Sie werden dazu eingesetzt, Späne von Werkstücken, die vorzugsweise aus Metall bestehen, abzutragen. Für eine exakte Bearbeitung der Werkstückoberfläche ist die Position der mindestens einen Schneide der Messerplatte des Werkzeugs von entscheidender Bedeutung. Es ist bekannt, mittels einer Einstellvorrichtung die mindestens eine geometrisch definierte Schneide gegenüber dem Grundkörper des Werkzeugs zu verstellen, insbesondere um einen definierten Durchmesser einer bearbeiteten Bohrung in dem Werkstück einzustellen. Es hat sich herausgestellt, dass bei der Einstellung der Position der mindestens einen Schneide diese eine Schwenkbewegung durchführt, sodass es sehr aufwendig ist, eine gewünschte Winkelstellung der Schneide, insbesondere eine Verjüngung einer Nebenschneide einer Messerplatte, exakt einzustellen.

Aus der DE 36 07 528 C1 geht ein gattungsgemäßes Werkzeug hervor, das zusätzlich zur Einstellvorrichtung für die mindestens eine geometrisch definierte Schneide noch eine an der Halterung vorgesehene Justiereinrichtung aufweist, mittels derer die Relativposition der Messerplatte gegenüber dem Werkzeug zusätzlich justierbar ist.

Aufgabe der Erfindung ist es, ein Werkzeug mit mindestens einer geometrisch definierten Schneide zu schaffen, deren Position gegenüber dem Grundkörper des Werkzeugs exakt einstellbar ist, wobei auch die Winkelposition der Schneide genau vorgegeben werden kann.

Zur Lösung dieser Aufgabe wird ein Werkzeug vorgeschlagen, das die in Anspruch 1 genannten Merkmale aufweist. Das Werkzeug weist mindestens eine Messerplatte mit wenigstens einer geometrisch definierten Schneide auf, außerdem mindestens eine Halterung, an der die Messerplatte befestigt ist. Die Halterung ihrerseits ist entweder Teil des Werkzeugs oder an diesem befestigt. Das Werkzeug weist eine Einstellvorrichtung auf, die auf die Halterung einwirkt und dazu dient, die Relativposition der Messerplatte gegenüber dem Werkzeug einzustellen. Dabei ist vorgesehen, dass die Einstellvorrichtung nicht unmittelbar auf die Messerplatte, sondern auf die Halterung einwirkt und damit die Position der an der Halterung befestigten Messerplatte beeinflusst. Ferner weist die Halterung eine Justiereinrichtung auf, mittels derer die Relativposition der Messerplatte gegenüber dem Werkzeug zusätzlich justierbar ist. Durch die Einstellvorrichtung ist also eine Grundposition der Messerplatte und damit der geometrisch definierten Schneide derselben vorgebbar. Mit Hilfe der Justiereinrichtung kann dann die exakte Winkelposition der Schneide eingestellt werden. Das Werkzeug zeichnet sich dadurch aus, dass die Halterung verformbar ausgelegt ist und einen mittels der Einstellvorrichtung um einen ersten Materialsteg in einer ersten Schwenkrichtung verlagerbaren Bereich aufweist und dass die Justiereinrichtung auf einen Teilbereich des Bereichs einwirkt und den Teilbereich um einen zweiten Materialsteg in einer zweiten Schwenkrichtung verlagert, die zur ersten Schwenkrichtung entgegengesetzt ist, und dass die Messerplatte an dem Teilbereich der Halterung fixiert ist.

Bevorzugt wird ein Ausführungsbeispiel des Werkzeugs, das sich dadurch auszeichnet, dass die Halterung elastisch verformbar ist und den Bereich aufweist, in dem die Messerplatte an der Halterung befestigt ist und der mittels der Einstellvorrichtung um einen ersten Schwenkwinkel in einer ersten Schwenkrichtung verlagerbar ist. Ein derartig ausgebildetes Werkzeug zeichnet sich durch einen einfachen Aufbau aus.

Die Justiereinrichtung wirkt also auf einen Teilbereich des Bereichs ein, an dem die Messerplatte befestigt ist und verlagert diese bei Betätigung um einen zweiten Schwenkbereich in einer zweiten Schwenkrichtung, die zur ersten Schwenkrichtung entgegengesetzt ist. Wird eine Messerplatte mittels einer Einstellvorrichtung gegenüber dem Grundkörper eines Werkzeugs verlagert, so ändert sich in der Regel der Neigungswinkel der Schneide der Messerplatte. Dem kann dadurch entgegengewirkt werden, dass die Justiereinrichtung vorgesehen ist, die eine Schwenkbewegung der Messerplatte in entgegengesetzter Richtung bewirkt. Die Messerplatte ist also gerade in dem Teilbereich des Bereichs angeordnet, der von der Justiereinrichtung verlagerbar ist. Besonderheit dieses Werkzeugs ist also, dass letztlich zwei Einrichtungen vorgesehen sind, die die Position der Schneide der Messerplatte beeinflussen: Durch die Einstellvorrichtung wird die Messerplatte und damit deren Schneide gegenüber dem Grundkörper des Werkzeugs verlagert und dabei in einer ersten Richtung verschwenkt. Die Justiereinrichtung ist so ausgelegt, dass sie dieser Schwenkbewegung entgegenwirkt und die Schneide in einer entgegengesetzten Richtung verschwenkt.

Die Erfindung wird im Folgenden anhand der Zeichnung näher erläutert. Es zeigen:
- Figur 1: ein Werkzeug in Seitenansicht;
- Figur 2: das Werkzeug gemäß Figur 1 in perspektivischer An- sicht schräg von oben und
- Figur 3: einen Teil des Werkzeugs, nämlich eine Halterung in Seitenansicht.

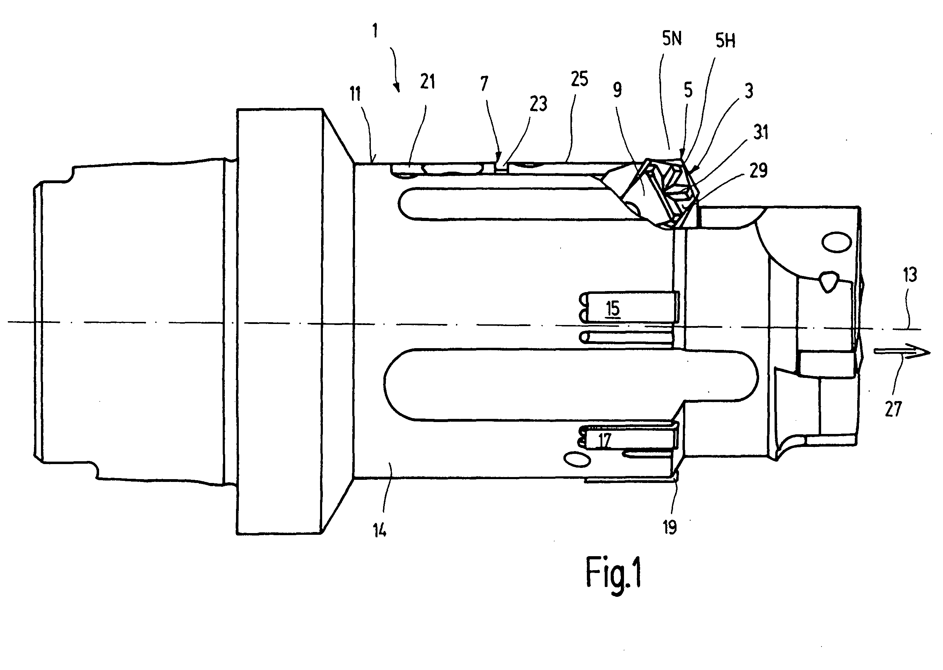

Figur 1 zeigt ein Werkzeug 1, das der spanenden Bearbeitung von Werkstücken dient, insbesondere der Bearbeitung von Oberflächen von Bohrungen in einem Werkstück. Es weist mindestens eine Messerplatte 3 mit einer Schneide 5 auf, die geometrisch definiert ist. Die Messerplatte 3 ist auf geeignete Weise an einer Halterung 7 fixiert. Es ist möglich, die Messerplatte 3 mittels einer Schraube an der Halterung 7 zu befestigen, oder aber, wie hier dargestellt, mit Hilfe einer Spannpratze 9, die von einer hier nicht dargestellten Schraube durchdrungen wird, die in die Halterung 7 eingreift.

Der Grundaufbau des Werkzeugs 1 ist grundsätzlich beliebig. Entscheidend ist, dass es die mindestens eine Messerplatte 3 mit der mindestens einen Schneide 5 aufweist, die über die Umfangsfläche 11 des Werkzeugs 1 hinausragt und Späne von einer Werkstückoberfläche, insbesondere Bohrungsoberfläche abtragen kann. Bei der Bearbeitung eines Werkstücks kann das Werkzeug 1 um seine Drehachse 13 in Rotation versetzt werden, während es in eine zu bearbeitende Bohrung eingeführt wird. Denkbar ist es grundsätzlich auch, das Werkzeug 1 festzuhalten und das zu bearbeitende Werkstück in Rotation zu versetzen oder auf sonstige Weise eine Relativdrehung zwischen Werkzeug 1 und dem hier nicht dargestellten Werkstück zu bewirken.

In den Grundkörper 14 des Werkzeugs 1 sind bei dem hier dargestellten Ausführungsbeispiel Führungsleisten 15, 17 und 19 eingesetzt, von denen die letztgenannte der Schneide 5 diametral gegenüberliegend angeordnet ist.

Die Messerplatte 3 ist mittels einer hier nicht dargestellten Einstellvorrichtung so verlagerbar, dass sie bei einem Verschleiß der Schneide 5 gegenüber der Drehachse 13, damit gegenüber dem Grundkörper 14 radial nach außen verlagert wird.

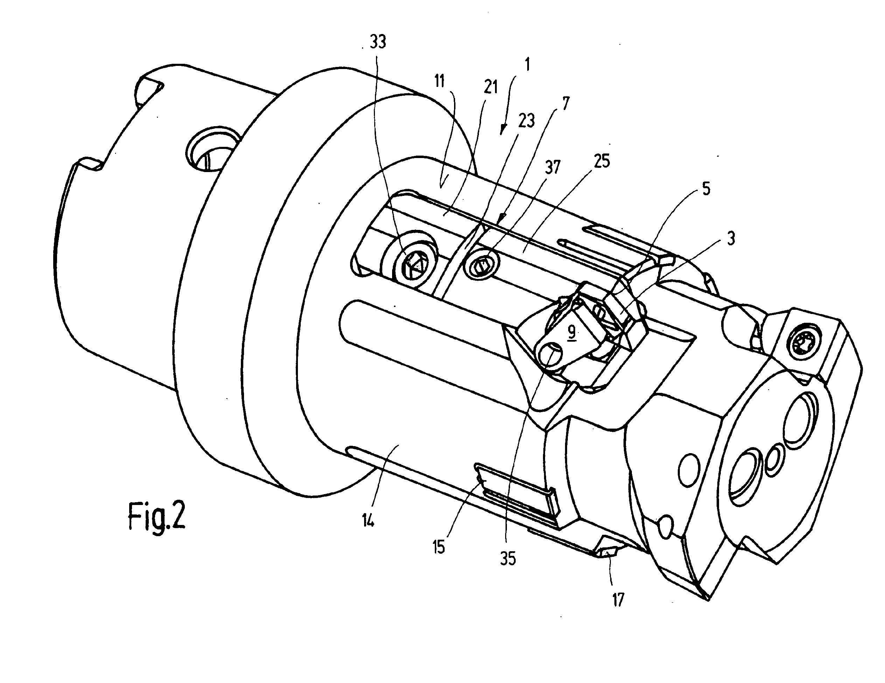

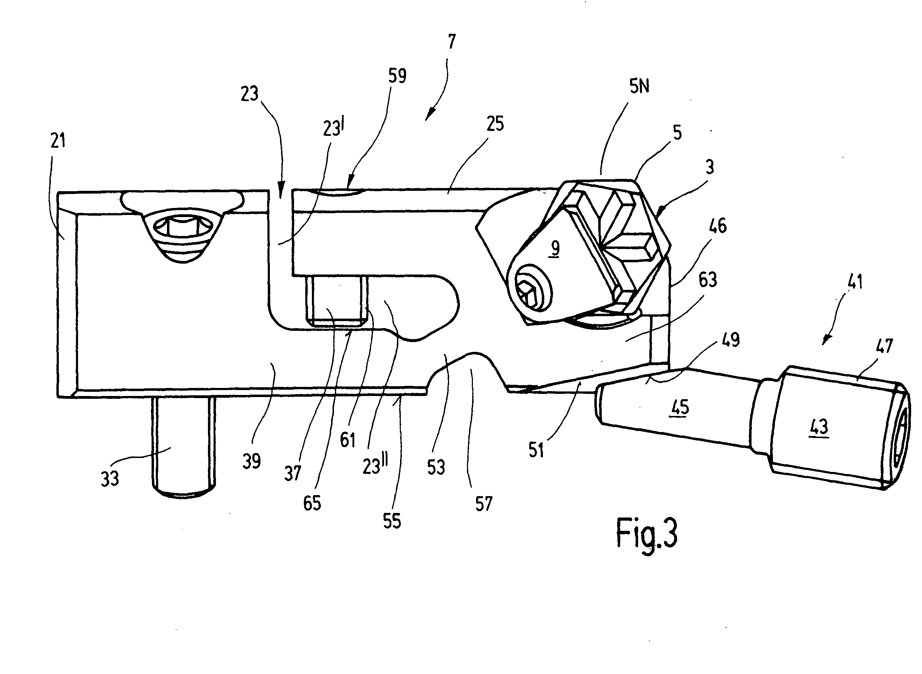

Aus Figur 1 ist andeutungsweise erkennbar, dass die Halterung 7 einen Abschnitt 21 aufweist, der mittels einer in Figur 2 und 3 dargestellten Halteschraube am Grundkörper 14 des Werkzeugs 1 befestigt ist. Die Halterung 7 weist einen Einschnitt 23 auf, der den Abschnitt 21 gegenüber einem Bereich 25 der Halterung 7 abgrenzt, in dem die Messerplatte 3 angebracht ist.

Aus der Seitenansicht gemäß Figur 1 ist erkennbar, dass die Schneide 5 in einer Ecke der Messerplatte 3 angeordnet ist, wobei ein erster Abschnitt der Schneide 5 in Richtung der durch einen Doppelpfeil 27 angedeuteten Vorschubrichtung des Werkzeugs 1 bei Bearbeitung eines Werkstücks geneigt ist. Es handelt sich hier um die Hauptschneide 5H. Ein weiterer Bereich der Schneide 5 ist entgegengesetzt zu der durch den Doppelpfeil 27 angedeuteten Vorschubrichtung des Werkzeugs 1 geneigt. Er fällt von rechts nach links ab, vorzugsweise um 1 µm/mm Länge. Es handelt sich hier um die Nebenschneide 5N.

Deutlich erkennbar ist, dass die Messerplatte 3 mehreckig, hier sechseckig ausgebildet ist und sechs Eckbereiche mit jeweils identischen Schneiden aufweist. Bei der exakten Bearbeitung einer Bohrungsoberfläche ist es wesentlich, dass der Neigungswinkel der Nebenschneide 5N genau eingestellt und bei einer Nachjustierung der Messerplatte 3 eingehalten wird.

Die Seitenansicht des Werkzeugs 1 zeigt eine Draufsicht auf die auch als Messerbrust bezeichnete Vorderseite 29 der Messerplatte 3. Diese weist sternförmig ausgebildete Vertiefungen, nämlich Spannuten 31 auf, in die die Spannpratze 9 eingreifen kann. Die Messerplatte 3 kann bei einem Verschleiß der Schneide 5 um eine gedachte, senkrecht auf der Vorderseite 29 stehende Achse gedreht werden, um eine neue Ecke, die dann die aktive Schneide der Messerplatte 3 bildet, mit einem Werkstück in Eingriff bringen zu können. Die Spannnuten 31 dienen dazu, die Messerplatte 3 in bestimmten Positionen sicher an der Halterung 7, hier im Bereich 25 der Halterung 7, festzuspannen.

Figur 2 zeigt das Werkzeug 1 in einer perspektivischen Ansicht schräg von vorne und von oben. Gleiche Teile sind mit gleichen Bezugsziffern versehen, sodass insofern auf die Beschreibung zu Figur 1 verwiesen wird, um Wiederholungen zu vermeiden.

Aus der perspektivischen Ansicht gemäß Figur 2 ist erkennbar, dass der Abschnitt 21 der Halterung 7 mittels der Halteschraube 33 am Grundkörper 14 des Werkzeugs 1 befestigt ist.

Die perspektivische Ansicht zeigt auch, dass der Abschnitt 21 durch den Einschnitt 23 von dem Bereich 25 der Halterung 7 abgegrenzt ist. Dabei ist der Einschnitt 23 so ausgelegt, dass er den Abschnitt 21 nicht völlig von dem Bereich 25 trennt. Darauf wird unten anhand von Figur 3 näher eingegangen.

Aus Figur 2 wird deutlich, dass die Messerplatte 3 an dem den Einschnitt 23 abgewandten Ende des Bereichs 25 an der Halterung 7 fixiert ist. Hier ist die die Spannpratze 9 durchdringende und in Halterung 7 eingreifende Spannschraube 35 erkennbar.

Der Bereich 25 der Halterung 7 weist eine Justierschraube 37 auf, auf die unten näher eingegangen wird.

Figur 3 zeigt die anhand der Figuren 1 und 2 erläuterte Halterung 7 in Vergrößerung. Das Werkzeug 1 ist zur deutlicheren Darstellung der Halterung 7 hier nicht wiedergegeben. Gleiche Teile sind mit gleichen Bezugsziffern versehen, sodass auf deren Beschreibung anhand der Figuren 1 und 2 verwiesen wird.

Die Halterung 7 weist also einen Abschnitt 21 auf, der mittels der Halteschraube 33 am Grundkörper 14 des Werkzeugs 1 befestigt ist. Es sei hier ausdrücklich darauf hingewiesen, dass der Abschnitt 21 an dem Grundkörper 14 auch auf andere Weise befestigt werden kann, sei es durch Kleben oder Löten. Denkbar ist es auch, dass der Abschnitt 21 Teil des Grundkörpers 14 des Werkzeugs 1 ist.

Aus der Seitenansicht gemäß Figur 3 ist erkennbar, dass der Einschnitt 23 sich zwar über die senkrecht zur Bildebene von Figur 3 gemessene Breite der Halterung 7 erstreckt, nicht jedoch über die ganze Höhe der Halterung 7. Der Abschnitt 21 ist über einen ersten Materialsteg 39 mit dem Bereich 25 der Halterung 7 verbunden.

Figur 3 zeigt eine Einstellvorrichtung 41, die von unten auf die Halterung 7 so einwirkt, dass die Position der Messerplatte 3 gegenüber dem Grundkörper 14 des hier nicht dargestellten Werkzeugs 1 einstellbar ist. Durch eine Betätigung der Einstellvorrichtung 41 kann die Messerplatte 3 weiter über die, Umfangsfläche 11 radial, damit also senkrecht zur Drehachse 13, nach außen verschoben werden. Einstelleinrichtungen der hier angesprochenen Art sind grundsätzlich bekannt, sodass hier lediglich deren Grundfunktionen wiedergegeben werden:

Die Einstellvorrichtung 41 weist eine Stellschraube 43 auf, die über einen Stellkeil 45 von unten auf den vorderen Bereich der Halterung 7 wirkt, also auf das dem Abschnitt 21 abgewandte Ende 46 der Halterung 7. Die Stellschraube 43 weist ein Außengewinde 47 auf, das mit einem hier nicht dargestellten Innengewinde im Grundkörper 14 des Werkzeugs 1 zusammenwirkt. Wird die Stellschraube 43 so gedreht, dass sich der Stellkeil 45 in Richtung der Drehachse der Stellschraube 43 nach schräg links oben verlagert, so wirkt eine Keilfläche 49 des Stellkeils 45 auf eine Stellfläche 51 auf der Unterseite der Halterung 7 ein, sodass deren vorderes Ende 46 nach oben gedrückt wird.

Bei einer Betätigung der Einstellvorrichtung 41 in der hier angesprochenen Art wird also das vordere Ende 46 der Halterung 7 um den ersten Materialsteg 39 am Fuße des Einschnitts 23 gegen den Uhrzeigersinn nach oben verschwenkt, sodass die Schneide 5 der Messerplatte 3 weiter über die Umfangsfläche 11 des Werkzeugs 1 hinausragt. Der erste Materialsteg 39 bildet einen definierten Schwenkbereich, um den der Bereich 25 der Halterung 7 gegenüber dem Abschnitt 21 verschwenkt wird. Bei dieser Einstellbewegung der Messerplatte 3 ändert sich der Neigungswinkel der Nebenschneide 5N: sie fällt gegenüber der Drehachse 13 des Werkzeugs 1 steiler von rechts nach links ab, als dies ursprünglich gewünscht war.

Figur 3 zeigt, dass, wie oben erläutert, der Einschnitt 23 sich nicht über die gesamte Höhe der Halterung 7 erstreckt, dabei den Abschnitt 21 vom Bereich 25 abgrenzt. Gleichzeitig wird unterhalb des Einschnitts 23, der in seinem ersten Bereich 23' senkrecht von oben nach unten verläuft, der erste Materialsteg 39 gebildet, der den Abschnitt 21 elastisch mit dem Bereich 25 verbindet.

Es zeigt sich hier, dass der Einschnitt 23 sich nach rechts, also in Richtung auf das vordere Ende 46 weiter erstreckt, also quasi L-förmig ausgebildet ist. Dabei ist es nicht zwingend erforderlich, dass der erste Bereich 23' des Einschnitts 23, wie hier dargestellt, senkrecht von oben nach unten verläuft und der zweite Bereich 23" im Wesentlichen horizontal verläuft. Am Ende des zweiten Bereichs 23" des Einschnitts 23 wird ein zweiter Materialsteg 53 gebildet, der dünner und schwächer ausgebildet sein kann, als der erste Materialsteg 39. Zur Einstellung der Dicke des zweiten Materialstegs 53 kann von der Unterseite 55 der Halterung 7 eine Vertiefung oder Ausnehmung 57 vorgesehen werden, die im Bereich des Endes des zweiten Bereichs 23" des Einschnitts 23 von unten in die Halterung 7 eingebracht wird.

Zwischen dem ersten Materialsteg 39 und dem zweiten Materialsteg 53 ist eine Justiereinrichtung 59 vorgesehen, die Teil der Halterung 7 ist und die die oben erwähnte Justierschraube 37 umfasst. Diese greift mit einem Außengewinde in das Material der Halterung 7, nämlich im Bereich 25 oberhalb des zweiten Bereichs 23" ein und überspannt den hier horizontal verlaufenden zweiten Bereich 23" des Einschnitts 23 von oben nach unten und zwar zwischen dem ersten Materialsteg 39 und dem zweiten Materialsteg 53.

Es zeigt sich hier, dass der Bereich 25, der vom Einschnitt 23 bis zum vorderen Ende 46 der Halterung 7 reicht, einen Teilbereich 63 umfasst, der rechts vom zweiten Materialsteg 53 liegt. Die Messerplatte 3 ist in diesem Teilbereich 63 des Bereichs 25 der Halterung 7 festgespannt.

Im Folgenden wird auf die Funktion der Einstellvorrichtung 41 und der Justiereinrichtung 59 näher eingegangen:

Bei Betätigung der Einstellvorrichtung 41 wird die Messerplatte 3 mehr oder weniger weit aus dem Grundkörper 14 des Werkzeugs 1 herausgeschoben. Bei der Darstellung gemäß Figur 3 ist die Stellschraube 43 gegenüber einer gedachten horizontalen Linie geneigt. Sie schließt mit dieser einen spitzen Winkel ein. Denkbar wäre es aber auch, die Stellschraube 43 exakt horizontal anzuordnen und einen Stellkeil von vorne unter die Stellfläche 51 der Halterung 7 zu schieben, um die Schneide 5 weiter über die Umfangsfläche 11 des Werkzeugs 1 hinauszuschieben. Entscheidend ist, dass bei einer Aktivierung der Einstellvorrichtung 41 das vordere Ende 46 der Halterung 7 - gemäß der Darstellung in Figur 3 - nach oben gedrückt wird. Damit schwenkt der Bereich 25 gemeinsam mit dem Teilbereich 63 um den ersten Materialsteg 39 gegen den Uhrzeigersinn. Der Einschnitt 23 ist in seinem ersten Bereich 23' breit genug, um die Verschwenkung des Bereichs 25 gegenüber dem Abschnitt 21 zuzulassen.

Die Justierschraube 37 der Justiereinrichtung 59 greift in den Grundkörper der Halterung 7 in dem Bereich 25 ein und überspannt den hier horizontal verlaufenden zweiten Bereich 23" des Einschnitts 23. Sie stützt sich dabei auf der Unterseite 65 des zweiten Bereichs 23" ab. Wird also von der Einstellvorrichtung 41 eine Kraft auf das vordere Ende der Halterung 7 von unten ausgeübt, so findet, wie gesagt, eine Schwenkbewegung des Bereichs 25 um den ersten Materialsteg 39 gegen den Uhrzeigersinn statt. Da die Justierschraube 37 in einem Gewinde im Grundkörper der Halterung 7 im Bereich 25 verläuft und sich auf der Unterseite 65 des zweiten Bereichs 23" abstützt, führt eine von der Einstellvorrichtung 41 ausgeübte Kraft nicht zu einer Verformung des zweiten Materialstegs 53. Die Höhe des Einschnitts 23 im zweiten Bereich 23" bleibt unverändert, weil die Justierschraube 37 diesen zweiten Bereich 23" überspannt und sich an der Unterseite 65 abstützt.

Nach Betätigung der Einstellvorrichtung 41 befindet sich die der Schneide 5 zugeordnete Ecke der Messerplatte 3 in einem gewünschten Abstand zu der hier nicht dargestellten Drehachse 13 des Werkzeugs 1. Sie ragt damit definiert über die Umfangsfläche des Werkzeugs 11 hinaus.

Um nun den Neigungswinkel der Nebenschneide 5N exakt einzustellen, wird die Justierschraube 37 so betätigt, dass die Höhe des zweiten Bereichs 23" vergrößert wird. Handelt es sich bei der Justierschraube 37 um eine Schraube mit einem Rechtsgewinde, so wird diese nach rechts gedreht und tritt damit aus dem mit einem Innengewinde versehenen Abschnitt des Bereichs 25 weiter aus und übt eine Kraft auf die Unterseite 65 des zweiten Bereichs 23" des Einschnitts 23 aus. Damit wird der zweite Bereich 23" aufgeweitet. Es findet damit eine Schwenkbewegung des Teilbereichs 63 des Bereichs 25, damit eine Schwenkbewegung der Messerplatte 3 im Uhrzeigersinn um den zweiten Materialsteg 53 statt, der einen definierten Schwenkbereich vorgibt. Dies führt dazu, dass sich der Winkel, den die Nebenschneide 5N mit einer gedachten Horizontalen in Figur 3 einschließt, verringert. Es lässt sich also der Abfall der Nebenschneide 5N mittels der Justierschraube 37 nach Betätigung der Einstellvorrichtung 41 exakt justieren. Insbesondere ist es möglich, eine bei Betätigung der Einstellvorrichtung 41 eintretende Verschwenkung der Nebenschneide 5N gegen den Uhrzeigersinn in einem gewünschten Maß durch Betätigung der Justiereinrichtung 59, die eine Verschwenkung des Teilbereichs 63 um den zweiten Materialsteg 53 im Uhrzeigersinn bewirkt, zu kompensieren.

Es zeigt sich also, dass die Halterung 7 einen Teilbereich 63 aufweist, der mittels der Einstellvorrichtung 41 um den ersten Materialsteg 39 gegen den Uhrzeigersinn verschwenkbar ist und der durch Betätigung der Justiereinrichtung 59, nämlich durch Drehung der Justierschraube 37, im Uhrzeigersinn um den den zweiten Materialsteg 53 geschwenkt werden kann. Dabei ist die Justiereinrichtung 59 in die Halterung 7 integriert, sodass diese sehr kompakt aufgebaut sein kann, unabhängig davon, ob sie, wie bei dem Ausführungsbeispiel gemäß Figur 3, als separates Teil gegenüber dem Grundkörper 14 eines Werkzeugs 1 ausgebildet ist, oder ob der Abschnitt 21 der Halterung 7 Teil des Grundkörpers 14 eines Werkzeugs 1 ist.

In beiden Fällen wird durch die Justiereinrichtung 59 sichergestellt, dass eine Verschwenkung des Teilbereichs 63 um den zweiten Materialsteg 53 bei Betätigung der Einstellvorrichtung 41 unterbleibt, solange die Justiereinrichtung 59 nicht betätigt wird. Diese überspannt den zweiten Bereich 23" des Einschnitts 23 und verhindert eine Veränderung der Kontur des zweiten Bereichs 23", während eine Einstellung der Messerplatte 3 mittels der Einstellvorrichtung 41 durchgeführt wird.

Letztlich ist der Verlauf des Einschnitts 23 innerhalb der Halterung 7 nicht entscheidend. Wesentlich ist, dass der zweite Materialsteg 53 sich zwischen dem ersten Materialsteg 39 und der Schneide 5 befindet, sodass nach einer Grobeinstellung der Schneide 5 mittels der Einstellvorrichtung 41 eine Justierung des Winkels der Nebenschneide 5N mittels der Justiereinrichtung 59 erfolgen kann, indem eine Schwenkbewegung der Nebenschneide 5N um den zweiten Materialsteg 53 erfolgen kann.

Aus den Erläuterungen zu den Figuren 1 bis 3 und zum Funktionsprinzip des Werkzeugs wird folgendes deutlich:

Die Halterung 7 für die Messerplatte 3 ist so ausgebildet, dass eine Justierung des Bearbeitungsradiuses des Werkzeugs 1 in zwei Schritten erfolgt. Zunächst wird mit Hilfe der Einstellvorrichtung 41 der gewünschte Bearbeitungsradius des Werkzeugs 1 dadurch eingestellt, dass die Position der Schneide 5 der Messerplatte 3 gegenüber der Drehachse 13 des Werkzeugs 1 eingestellt wird. Dazu wird die Stellschraube 43 der Einstellvorrichtung 41 so gedreht, dass der Teilbereich 63 der Halterung 7 gemeinsam mit der Messerplatte 3 radial nach außen verlagert wird. Die von unten auf den Teilbereich 63 wirkende Kraft führt dazu, dass der Bereich 25 der Halterung 7 gegenüber dem Abschnitt 21 gegen den Uhrzeigersinn verschwenkt wird. Die Schwenkbewegung erfolgt im Bereich des ersten Materialstegs 39.

Betrachtet man Figur 3, so zeigt sich, dass die Einstellkräfte durch die Einstellvorrichtung 41 rechts von der Justiereinrichtung 59 wirken, die den Einschnitt 23 überspannt und zu einer Stabilisierung des Bereichs 25 derart führt, dass der zweite Materialsteg 53 bei einer radialen Auswärtsbewegung der Messerplatte 3 sich nicht verformt. Der Materialsteg 39 liegt also zwischen dem Abschnitt 21 der Halterung 7 und der Justiereinrichtung 59. Dabei kommt es, wie gesagt, nicht zwingend auf die Ausgestaltung des Bereichs des Einschnitts 23 an, welcher links von der Justiereinrichtung 59 verläuft. Eine Verformung des zweiten Bereichs 23" rechts von der Justiereinrichtung 59 in Figur 3 erfolgt bei einer Aktivierung der Justiereinrichtung 59. Beim Einschrauben der Justierschraube 37 wird der zweite Bereich 23" des Einschnitts 23 aufgeweitet, was zu einer Verformung des zweiten Materialstegs 53 derart führt, dass der Teilbereich 63 und damit die Messerplatte 3 im Uhrzeigersinn verschwenkt werden. Dies führt zu einer Einstellung des Neigungswinkels der Nebenschneide 5N der Messerplatte 3. Die Verschwenkung der Nebenschneide 5N der Messerplatte 3 bei Aktivierung der Justiereinrichtung 59 beruht darauf, dass sich der Teilbereich 63 mit seinem vorderen Ende auf der Justiereinrichtung 59 abstützt. Es ist also nicht möglich, dass bei einer Betätigung der Justiereinrichtung 59 die Messerplatte 3 radial nach innen, also in Richtung auf die Drehachse 13 des Werkzeugs 1 verlagert wird. Die Verschwenkung der Nebenschneide 5N im Uhrzeigersinn wird dadurch erreicht, dass der zweite Materialsteg 53 zwischen der Justiereinrichtung 59 und dem Abstützbereich des Teilbereichs 63 auf der Justiereinrichtung 59 liegt.

Andererseits liegt eben der erste Materialsteg 39 links von der Justiereinrichtung 59, welche den Bereich 25 in sich stabilisiert. Dadurch kann bei einer Betätigung der Einstellvorrichtung 41 der zweite Materialsteg 53 sich nicht verformen, und die Kräfte der Einstellvorrichtung 41 werden in den ersten Materialsteg 39 eingeleitet, sodass der Bereich 25 gegenüber dem Abschnitt 21 der Halterung 7 verschwenkt wird.

Wesentlich ist hier der Gesichtspunkt, dass der erste Materialsteg 39 links von der Justiereinrichtung 59 und der zweite Materialsteg 53 rechts davon liegt. Der erste Materialsteg 39 wird von der Einstellvorrichtung 41 verformt, der zweite Materialsteg 53 von der Justiereinrichtung 59.

## Patentansprüche

1. Werkzeug zur spanenden Bearbeitung von Werkstücken mit
- mindestens einer wenigstens eine geometrisch definierte Schneide (5) aufweisenden Messerplatte (3),
- mindestens eine Halterung (7), die am Werkzeug (1) befestigt oder Teil desselben ist und an der die Messerplatte (3) befestigt ist,
- mit einer Einstellvorrichtung (41), die auf die Halterung (7) einwirkt und mittels derer die Relativposition der Halterung (7) gegenüber dem Werkzeug (1) und damit der Messerplatte (3) gegenüber dem Werkzeug (1) einstellbar ist,
- wobei die Halterung (7) eine Justiereinrichtung (59) aufweist, mittels derer die Relativposition der Messerplatte (3) gegenüber dem Werkzeug (1) zusätzlich justierbar ist.
**dadurch gekennzeichnet, dass**
- die Halterung (7) verformbar ausgelegt ist und einen mittels der Einstellvorrichtung (41) um einen ersten Materialsteg (39) in einer ersten Schwenkrichtung verlagerbaren Bereich (25) aufweist und dass
- die Justiereinrichtung (59) auf einen Teilbereich (63) des Bereichs (25) einwirkt und den Teilbereich (63) um einen zweiten Materialsteg (53) in einer zweiten Schwenkrichtung verlagert, die zur ersten Schwenkrichtung entgegengesetzt ist, und dass die Messerplatte (3) an dem Teilbereich (63) der Halterung (7) fixiert ist.

2. Werkzeug nach Anspruch 1, **dadurch gekennzeichnet, dass** die Halterung (7) einen Abschnitt (21) aufweist, der Teil des Grundkörpers (14) des Werkzeugs (1) ist oder fest mit diesem verbunden ist.

3. Werkzeug nach Anspruch 2, **dadurch gekennzeichnet, dass** der Abschnitt (21) durch einen Einschnitt (23) von dem Bereich (25) abgegrenzt ist.

4. Werkzeug nach Anspruch 3, **dadurch gekennzeichnet, dass** der Einschnitt (23) einen ersten Bereich (23') und einen zweiten Bereich (23") aufweist.

5. Werkzeug nach einem der Ansprüche 1 bis 4, **dadurch gekennzeichnet, dass** der erste Materialsteg (39) am Übergangsbereich zwischen dem ersten Bereich (23') und dem zweiten Bereich (23") angeordnet ist.

6. Werkzeug nach einem der Ansprüche 1 bis 5, **dadurch gekennzeichnet, dass** der zweite Materialsteg (53) im Bereich des zweiten Bereichs (23") des Einschnitts (23) angeordnet ist.

7. Werkzeug nach einem der Ansprüche 1 bis 6, **dadurch gekennzeichnet, dass** der erste Bereich (23') unter einem Winkel gegenüber dem zweiten Bereich (23") verläuft.

8. Werkzeug nach einem der Ansprüche 1 bis 7, **dadurch gekennzeichnet, dass** die Dicke des zweiten Materialstegs (53) durch den Verlauf des zweiten Bereichs (23") in der Halterung (7) und durch eine Ausnehmung (57) in der Halterung (7) definiert wird.

9. Werkzeug nach einem der Ansprüche 3 bis 8, **dadurch gekennzeichnet, dass** die Justiereinrichtung (59) eine Justierschraube (37) aufweist, die den Einschnitt (23) in einem Bereich überspannt, der zwischen dem ersten Materialsteg (39) und dem zweiten Materialsteg (53) liegt.

## Claims

1. A tool for machining workpieces comprising
- at least one cutting insert (3), which encompasses at least one geometrically defined cutting edge (5),
- at least one holder (7), which is fastened to the tool (1) or which is part thereof and to which the cutting insert (3) is fastened,
- an adjusting device (41), which acts on the holder (7) and by means of which the relative position of the holder (7) relative to the tool (1) and thus of the cutting insert (3) relative to the tool (1) can be adjusted,
- wherein the holder (7) encompasses an adjusting device (59), by means of which the relative position of the cutting insert (3) relative to the tool (1) can additionally be adjusted,
**characterized in that**
- the holder (7) is designed so as to be deformable and encompasses an area (25), which can be displaced about a first material web (39) in a first pivot direction by means of the adjusting device (41) and that
- the adjusting device (59) acts on a partial area (63) of the area (25) and displaces the partial area (63) about a second material web (53) in a second pivot direction, which is opposite to the first pivot direction, and that the cutting insert (3) is fixed to the partial area (63) of the holder (7).

2. The tool according to claim 1, **characterized in that** the holder (7) encompasses a section (21), which is part of the base body (14) of the tool (1) or which is fixedly connected thereto.

3. The tool according to claim 2, **characterized in that** the section (21) is separated from the area (25) by means of a notch (23).

4. The tool according to claim 3, **characterized in that** the notch (23) encompasses a first area (23') and a second area (23").

5. The tool according to any one of claims 1 to 4, **characterized in that** the first material web (39) is arranged at the transition area between the first area (23') and the second area (23").

6. The tool according to any one of claims 1 to 5, **characterized in that** the second material web (53) is arranged in the area of the second area (23") of the notch (23).

7. The tool according to any one of claims 1 to 6, **characterized in that** the first area (23') runs at an angle relative to the second area (23").

8. The tool according to any one of claims 1 to 7, **characterized in that** the thickness of the second material web (53) is defined by the course of the second area (23") in the holder (7) and by a recess (57) in the holder (7).

9. The tool according to any one of claims 3 to 8, **characterized in that** the adjusting device (59) encompasses an adjusting screw (37), which spans the notch (23) in an area, which is located between the first material web (39) and the second material web (53).

## Revendications

1. Outil pour l'usinage par enlèvement de pièces à usiner comprenant
- au moins un bloc d'appui (3) présentant au moins une lame (5) définie géométriquement,
- au moins un dispositif de fixation (7) qui est fixé à l'outil (1) ou fait partie de celui-ci et auquel le bloc d'appui (3) est fixé,
- un dispositif de réglage (41) qui agit sur le dispositif de fixation (7) et au moyen duquel la position relative du dispositif de fixation (7) peut être réglée par rapport à l'outil (1) et ainsi du bloc d'appui (3) par rapport à l'outil (1),
- dans lequel le dispositif de fixation (7) présente un dispositif d'ajustage (59) au moyen duquel la position relative du bloc d'appui (3) peut en outre être ajustée par rapport à l'outil (1),
**caractérisé en ce que**
- le dispositif de fixation (7) est conçu de manière déformable et présente une région (25) pouvant être déplacée au moyen du dispositif de réglage (41) autour d'une première traverse de matériau (39) dans une première direction de pivotement et que
- le dispositif d'ajustage (59) agit sur une région partielle (63) de la région (25) et déplace la région partielle (63) autour d'une seconde traverse de matériau (53) dans une seconde direction de pivotement, qui est opposée à la première direction de pivotement, et que le bloc d'appui (3) est fixé à la région partielle (63) du dispositif de fixation (7).

2. Outil selon la revendication 1, **caractérisé en ce que** le dispositif de fixation (7) présente une section (21) qui fait partie du corps de base (14) de l'outil (1) ou est reliée de manière fixe à celui-ci.

3. Outil selon la revendication 2, **caractérisé en ce que** la section (21) est délimitée par une découpe (23) de la région (25).

4. Outil selon la revendication 3, **caractérisé en ce que** la découpe (23) présente une première région (23') et une seconde région (23").

5. Outil selon l'une quelconque des revendications 1 à 4, **caractérisé en ce que** la première traverse de matériau (39) est disposée au niveau de la région de transition entre la première région (23') et la seconde région (23").

6. Outil selon l'une quelconque des revendications 1 à 5, **caractérisé en ce que** la seconde traverse de matériau (53) est disposée dans la région de la seconde région (23") de la découpe (23).

7. Outil selon l'une quelconque des revendications 1 à 6, **caractérisé en ce que** la première région (23') s'étend à un angle par rapport à la seconde région (23").

8. Outil selon l'une quelconque des revendications 1 à 7, **caractérisé en ce que** l'épaisseur de la seconde traverse de matériau (53) est définie par l'étendue de la seconde région (23") dans le dispositif de fixation (7) et par un évidement (57) dans le dispositif de fixation (7).

9. Outil selon l'une quelconque des revendications 3 à 8, **caractérisé en ce que** le dispositif d'ajustage (59) présente une vis d'ajustage (37) qui recouvre la découpe (23) dans une région qui se situe entre la première traverse de matériau (39) et la seconde traverse de matériau (53).
